Europäisches Patentamt

(19) European Patent Office

Office européen des brevets

(11) Numéro de publication : **0 290 346 B1**

(12) **FASCICULE DE BREVET EUROPEEN**

(45) Date de publication du fascicule du brevet :
16.10.91 Bulletin 91/42

(51) Int. Cl.⁵ : **C03B 23/035**, C03B 23/03

(21) Numéro de dépôt : **88401098.4**

(22) Date de dépôt : **05.05.88**

(54) **Procédé et dispositifs pour le bombage de plaques de verre.**

(30) Priorité : 07.05.87 DE 3715151

(43) Date de publication de la demande :
09.11.88 Bulletin 88/45

(45) Mention de la délivrance du brevet :
16.10.91 Bulletin 91/42

(84) Etats contractants désignés :
BE CH DE ES FR GB IT LI LU NL SE

(56) Documents cités :
EP-A- 0 169 770
EP-A- 0 245 175
FR-A- 2 046 790
FR-A- 2 085 464
US-A- 3 193 367
US-A- 4 204 854
US-A- 4 508 556

(72) Inventeur : **Kuster, Hans-Werner**
**Schervierstrasse 11**
**W-5100 Aachen (DE)**
Inventeur : **Radermacher, Herbert**
**Belven 118**
**B-4730 Raeren (DE)**
Inventeur : **Vanaschen, Luc**
**Binsterweg 113**
**B-4700 Eupen (BE)**

(74) Mandataire : **Leconte, Jean-Gérard et al**
**Saint-Gobain Recherche 39, Quai Lucien**
**Lefranc**
**F-93304 Aubervilliers Cedex (FR)**

(73) Titulaire : **SAINT-GOBAIN VITRAGE**
**INTERNATIONAL**
**18, avenue d'Alsace**
**F-92400 Courbevoie (FR)**
(84) Etats contractants désignés :
BE CH ES FR GB IT LI LU NL SE
Titulaire : **VEGLA Vereinigte Glaswerke GmbH**
**Viktoriaallee 3-5**
**W-5100 Aachen (DE)**
(84) Etats contractants désignés :
DE

**Description**

La présente invention concerne le bombage de plaques de verre selon la technique dans laquelle les plaques de verre sont chauffées à la température de bombage en position horizontale dans un four continu et sont pressées contre une forme de bombage à surface pleine à l'aide d'un cadre de formage dans un poste de bombage disposé à la suite du four continu, puis sont amenées dans un poste de refroidissement à l'aide d'un cadre de support.

Dans le cas d'un procédé connu de ce type, les plaques de verre pénètrent dans le poste de bombage sur un lit de gaz chaud, sont pressées contre la forme de bombage à surface pleine par un cadre de formage déplaçable vers le haut et vers le bas, sont maintenues par aspiration contre la forme de bombage à surface pleine et, après abaissement du cadre de formage sont déposées sur un cadre de support mobile dans un sens et dans l'autre entre le poste de bombage et le poste de refroidissement (US 3846104).

Ce procédé connu ne permet pas de fabriquer des vitrages à bombage complexe, c'est-à-dire des vitrages qui présentent des zones bombées de manière convexe et simultanément des zones bombées de manière concave.

On connaît, en outre, un procédé de bombage de plaques de verre selon lequel, dans le poste de bombage, un courant de gaz chaud est dirigé sur les plaques de verre et le débit ainsi que la pression du courant de gaz chaud sont réglés de telle façon que les plaques de verre soient pressées par ce courant de gaz chaud contre la forme de bombage et soient bombées dans leur forme finale (EP-A-169770). A l'aide de ce procédé connu, il est certes possible d'agir sur la majeure partie de la surface du vitrage au moyen d'une pression uniforme et de produire ainsi des formes complexes. Cependant, étant donné que, dans ce procédé, les forces de bombage sont essentiellement produites par la pression dynamique du courant de gaz, et que la fraction de pression dynamique utilisable pour le bombage n'est généralement pas suffisante dans les zones marginales des plaques de verre, c'est-à-dire dans les régions où celles-ci sont fortement courbées vers le haut et ne permet pas de presser ces zones marginales pour les appliquer de manière étroite contre la forme de bombage, ce procédé de bombage connu ne convient pas non plus pour la fabrication de vitrages très fortement bombés.

L'invention a pour but de développer un procédé tel que même des vitrages fortement bombés et/ou présentant des bombages complexes puissent être fabriqués.

Ce but est atteint par un procédé pour bomber des plaques de verre dans lequel les plaques de verre sont chauffées dans une position horizontale, dans un four continu, à la température de bombage, et sont pressées dans un poste de bombage adjacent au four continu, à l'aide d'un cadre annulaire contre une forme de bombage à surface pleine puis sont amenées dans un poste de refroidissement au moyen d'un cadre de support. Le procédé uniforme à l'invention est caractérisé par un pressage des plaques de verre par la pression statique d'un gaz chaud sous pression dans la zone située à l'intérieur du cadre annulaire, la pression statique étant produite dans une chambre dont une face est constituée par le cadre annulaire de formage fermé par le vitrage appliqué de manière étanche contre ce cadre annulaire.

Grâce à la combinaison du pressage mécanique au moyen d'un cadre annulaire et du pressage sur l'ensemble de la surface située à l'intérieur de ce cadre au moyen d'un gaz chaud sous pression, on obtient une pression uniforme sur l'ensemble de la surface, ce qui a pour résultat que le vitrage est pressé d'une manière entièrement indépendante du cadre par l'ensemble de sa surface contre la forme de bombage à surface pleine. La production des forces de pression par la pression purement statique du gaz chaud a alors l'avantage supplémentaire de n'exiger que relativement peu d'énergie.

Le procédé conforme à l'invention peut être mis en oeuvre de diverses manières. Ainsi, il est par exemple possible d'installer la forme de bombage à surface pleine en position supérieure, le cadre annulaire délimitant la chambre de pression en position inférieure. De même, la forme de bombage à surface pleine peut aussi être utilisée en position inférieure et le cadre annulaire délimitant la chambre de pression en position supérieure. Dans ce cas, il est avantageux de réaliser la forme de bombage à surface pleine inférieure en deux parties, à savoir une partie formant une couronne extérieure et une partie formant la surface à l'intérieur de cette couronne, la couronne extérieure servant alors au transport ultérieur du vitrage bombé et constituant un cadre de support qui se sépare de la partie centrale.

Le transfert d'une plaque de verre chauffée à la température de bombage du four de chauffage vers le poste de bombage peut aussi s'effectuer de diverses manières. Par exemple, on peut faire en sorte que, la plaque de verre chauffée à l'intérieur du four de chauffage soit soulevée par un plateau-ventouse et soit amenée par ce plateau-ventouse dans le poste de bombage où elle est déposée sur l'outil de bombage inférieur. En variante, dans la mesure où la chambre de pressage constitue l'outil de pressage inférieur, on peut la réaliser sous la forme d'un élément déplaçable entre le poste de bombage et le four et y déposer la plaque de verre chauffée dans le four de chauffage à l'aide d'un plateau-ventouse mobile vers le haut et vers le bas. Il est aussi possible de réaliser la chambre de pression portant le cadre annulaire, en deux parties, et de rendre déplaçable la partie portant le cadre annulaire qui prend en charge le vitrage à l'intérieur du four et, après être revenue dans le poste de bombage, s'applique de manière étanche contre la partie inférieure de la chambre de pression et forme avec cette partie inférieure, la chambre de pression complète.

Selon une autre forme d'exécution, il est aussi possible de transporter les plaques de verre dans le poste de bombage sur des rouleaux transporteurs, de les soulever par un courant de gaz chaud orienté du bas vers le haut pour les appliquer contre la forme de bombage à surface pleine disposée au-dessus des rouleaux transporteurs et de les maintenir ainsi contre la forme de bombage au moyen du courant de gaz chaud, de sortir les rouleaux transporteurs latéralement et de réunir les outils de pressage, étant entendu qu'à présent le courant de gaz maintenant la plaque de verre contre la forme supérieure est interrompu lorsque les deux outils de formage sont pressés l'un contre l'autre et qu'une pression statique pure est produite.

Le transport du vitrage bombé depuis le poste de bombage vers le poste de refroidissement s'effectue en tout cas à l'aide d'un cadre de support sur lequel le vitrage est déposé par l'outil de formage supérieur après l'opération de bombage.

Selon une autre forme d'exécution du procédé conforme à l'invention, il est possible de faire en sorte que les plaques de verre à bomber soient transportées à travers le four de chauffage sur un élément de bombage en forme de cadre, sans à-coups et soient chauffées à la température de bombage, l'élément de bombage en forme de cadre étant d'une configuration telle qu'il coopère, à l'intérieur du poste de bombage, avec une chambre de pression et qu'il forme avec la plaque de verre, la paroi de fermeture de la chambre de pression. Cette forme d'exécution convient, en particulier, pour le bombage de plaques de verre disposées par paires, c'est-à-dire le bombage de plaques de verre qui sont destinées à la fabrication de vitrages de sécurité feuilletés.

Le procédé selon l'invention peut être réalisé dans une installation comportant un four continu, un poste de bombage dans lequel est disposée une forme de bombage à surface pleine, un poste de refroidissement et un cadre de support amenant les feuilles de verre bombées du poste de bombage au poste de refroidissement. Elle comporte en outre une chambre de pression pouvant être mise sous pression au moyen d'un gaz chaud, dont la face d'extrémité est délimitée par un cadre annulaire coopérant avec la forme de bombage à surface pleine pour le pressage des feuilles de verre.

Divers exemples de réalisation du procédé de l'invention et de dispositifs convenant pour sa mise en oeuvre seront décrits ci-après plus en détail avec référence aux dessins dans lesquels :

• **figure 1** : vue en coupe longitudinale verticale d'une installation pour le chauffage, le bombage et la trempe thermique de vitrages d'automobiles bombés, comportant un poste de bombage conforme à l'invention,

• **figure 2** : vue en coupe longitudinale de l'installation suivant la ligne II-II de la figure 1,

• **figure 3** : vue également en coupe longitudinale d'une installation pour le chauffage, le bombage et le refroidissement d'une paire de plaque de verre destinées ultérieurement à former un vitrage feuilleté, comportant un poste de bombage conforme à l'invention,

• **figure 4** : une autre forme de réalisation d'un poste de bombage, dans laquelle les plaques de verre chauffées sont transportées dans le poste de bombage sur un transporteur à rouleaux et la section du transporteur à rouleaux est écartée de la zone d'action des outils de bombage en vue de l'exécution du bombage,

• **figure 5** : vue en coupe verticale de l'installation suivant la ligne V-V de la figure 4,

• **figure 6** : une autre forme de réalisation d'un poste de bombage dans laquelle la forme de bombage à surface pleine est disposée en dessous de la plaque de verre et la chambre de pression comportant un cadre disposée au-dessus de la plaque de verre,

• **figure 7** : le poste de bombage représenté sur la figure 6 les outils de bombage étant représentés en position de travail.

• **figure 8** : une autre forme de réalisation d'un poste de bombage dans laquelle les plaques de verre sont disposées sur une table à coussin gazeux escamotable.

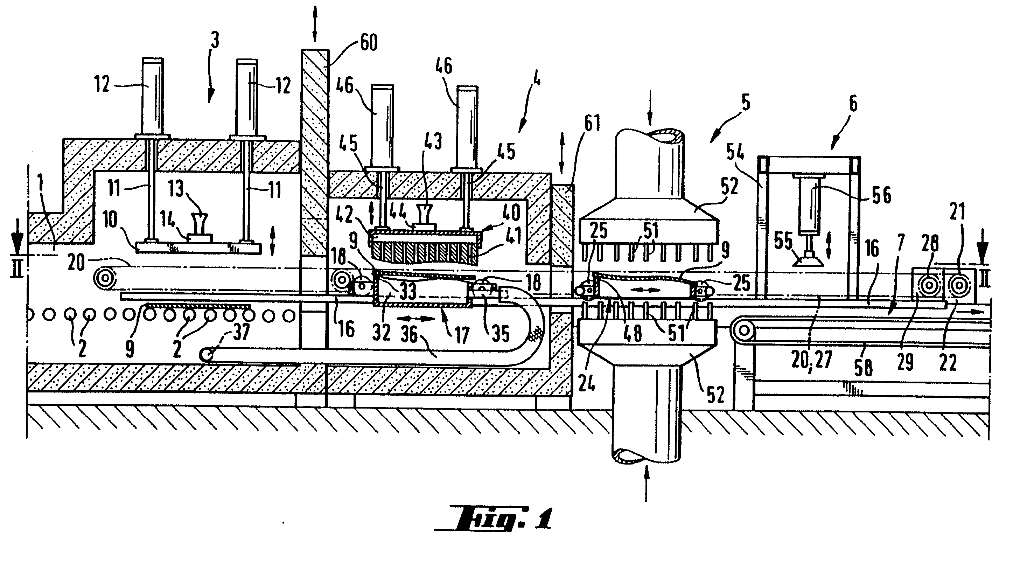

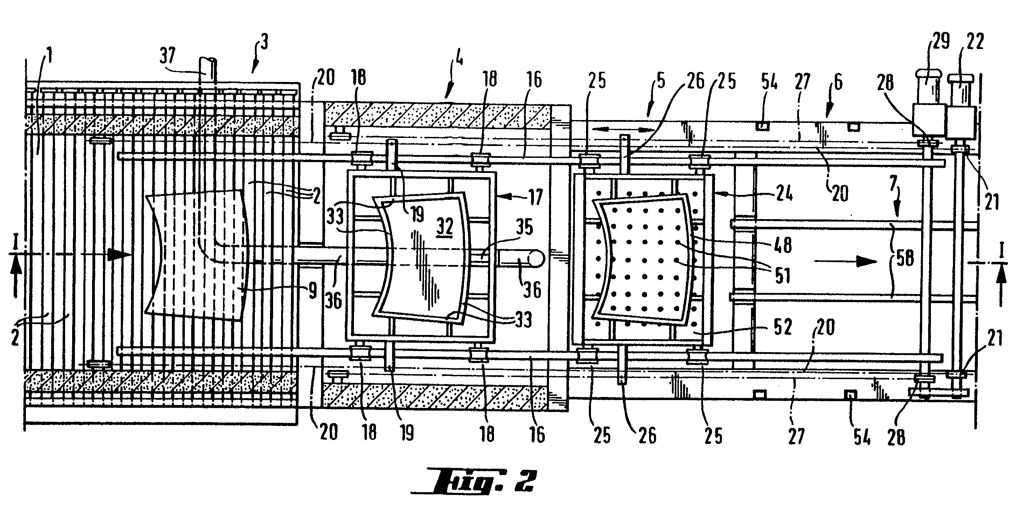

Une installation destinée à fabriquer des vitrages d'automobiles trempés et bombés, telle qu'elle est représentée dans une vue d'ensemble sur les figures 1 et 2, comprend essentiellement un four continu horizontal 1, dans lequel des plaques de verre sont chauffées à la température de bombage sur un transporteur horizontal, par exemple un transporteur à rouleaux 2, un poste de bombage 4, un poste de trempe 5 et un poste de transfert 6 dans lequel les vitrages terminés résultant du bombage et de la trempe des plaques de verre sont transférés sur un dispositif transporteur 7 au moyen duquel ils sont transportés, par exemple, vers un poste de contrôle ou un poste d'emballage.

Entre le four continu horizontal 1 et le poste de bombage 4 est prévu un poste de transfert 3. Dans ce poste de transfert 3, les plaques de verre 9 qui sont à la température de bombage sont soulevées du transporteur à rouleaux 2 et transférées sur un cadre annulaire de bombage. A cet effet, dans le poste de transfert 3, un plateau-ventouse 10 est monté mobile vers le haut et vers le bas par le fait qu'il est fixé à des tiges 11 de vérins 12, pouvant aussi être déplacés verticalement entre une position inférieure, dans laquelle la plaque de verre 9 est saisie et une position supérieure suffisante pour qu'un cadre de bombage puisse être amené sous la plaque de verre 9. Sur le plateau-ventouse 10 est montée une pompe centrifuge à vide 13 dont le moteur d'entraînement 14 est piloté par l'unité de commande centrale de l'installation. Cette pompe 13 produit la dépression nécessaire pour soulever la plaque de verre 9 du transporteur à rouleaux 2 et la maintenir contre le plateau-ventouse 10.

Les postes 3, 4, 5 et 6 sont traversés par des rails 16. Un chariot 17 est mobile sur ces rails 16 par l'intermédiaire de ses roues 18 entre le poste de transfert 3 et le poste de bombage 4. L'entraînement du chariot 17 s'effectue grâce à un taquet d'entraînement 19 à l'aide d'une chaîne 20 qui est entraînée par le moteur 22 par l'intermédiaire de la roue à chaîne 21. Le moteur 22 est également piloté par l'unité de centrale de commande de l'installation.

Sur les rails 16 est également mobile un autre chariot 24 sur roues 25, entraîné par une chaîne 27 par l'intermédiaire du taquet d'entraînement 26. L'entraînement de la chaîne 27 s'effectue par l'intermédiaire du pignon 28 entraîné par le moteur 29. Ce chariot 24, qui, dans le sens de progression des plaques de verre est disposé derrière le chariot 17, est mobile entre le poste de bombage 9, le poste de trempe 5 et le poste de transfert 6. Son moteur d'entraînement 29 est aussi piloté par l'unité de commande centrale.

Sur le chariot 17, qui se déplace dans un sens et dans l'autre entre le poste de transfert 3 et le poste de bombage 4, est prévue une chambre de pression 32. Cette chambre de pression 32 a la forme d'un caisson dont le côté supérieur est ouvert, mais dont les autres côtés sont fermés. Le bord supérieur 33 de cette chambre de pression 32 correspond, quant à la forme de son pourtour, à la forme des vitrages bombés. Son bord supérieur 33 constitue le cadre annulaire de la presse de bombage dont la contre-forme est constituée par la forme pleine 40 disposée au-dessus de la chambre de pression 32. La chambre de pression 32 est pourvue d'une tubulure 35 raccordée par un tuyau flexible résistant à la chaleur 36 à une conduite 37 aboutissant à un compresseur non représenté, qui fournit du gaz chauffé à environ 600°C, en particulier de l'air, à la pression nécessaire pour le procédé de bombage.

La forme pleine 40 est aspirante par le fait qu'elle est pourvue de canaux 41 qui la traversent de part en part et qui s'ouvrent dans la cavité 42 prévue derrière elle. Cette cavité 42 est mise sous dépression par une pompe centrifuge à vide 43. La pompe centrifuge à vide 43 est entraînée par un moteur 44 piloté par l'unité de commande centrale. La forme pleine 40 aspirante est montée sur des tiges 45 de vérins 46 de manière à pouvoir se déplacer dans la direction verticale. La commande des vérins 46 s'effectue aussi par l'intermédiaire de l'unité de commande centrale.

Le chariot 24 porte un cadre de support 48 qui, de par sa forme et ses dimensions, correspond à la forme et aux dimensions du bord du vitrage bombé. Ce cadre de support 48 sert de cadre de transport pendant la trempe du vitrage 9 dans le poste de trempe 5. Dans ce poste de trempe 5, le vitrage est brusquement refroidi à l'air de la manière habituelle en état amené entre des ajutages 51 soufflants, orientés en regard les uns des autres issus de deux caissons de soufflage 52.

Au terme de l'opération de trempe, le chariot 24 portant le vitrage 9 est introduit dans le poste de transfert 6.

Dans le poste de transfert 6, sur un bâti 54 est monté un dispositif de préhension 25 verticalement mobile qui est actionné par un vérin 56 à nouveau piloté par l'unité de commande centrale. A l'aide du dispositif de préhension 55, le vitrage 9 trempé est soulevé du cadre de support 48 et est déposé sur des bandes transporteuses 58. Les bandes transporteuses 58 sont entraînées d'une manière appropriée, non représentée sur les dessins, et amènent les vitrages terminés au poste de contrôle ou d'emballage qui suit.

Le procédé selon l'invention se déroule de la façon suivante.

La feuille de verre 9 chauffée à la température de bombage dans le four continu 1 est soulevée des rouleaux transporteurs 2 par le plateau-ventouse 10 dès qu'elle a atteint sa position en dessous du plateau-ventouse 10 dans le poste de transfert 3. A cet effet, le plateau-ventouse 10 est abaissé jusque sur la plaque de verre 9 ou jusqu'à une courte distance au-dessus de celle-ci, puis, lorsqu'il a saisi la plaque de verre 9, il est soulevé jusqu'à une position haute à l'aide des vérins 12.

Le chariot 17 avec la chambre de pression 32 passe alors de sa position extrême située à l'intérieur du poste de bombage 4, au poste de transfert 3, dans son autre position extrême, précisément en dessous de la plaque de verre 9 retenue par le plateau-ventouse 10. Dès que le chariot 17 a atteint cette position amont extrême, le plateau-ventouse 10 descend avec la plaque de verre 9. Lorsque la plaque de verre 9 se trouve à courte distance au-dessus du bord supérieur 33 de la chambre de pression 32, la dépression dans le plateau-ventouse 10 est coupée et, si nécessaire, une légère surpression est produite dans la cavité 42 du plateau-ventouse de sorte que la plaque de verre 9 est déposée sur le bord supérieur 33 de la chambre de pression 32. Le plateau-ventouse 10 est ensuite soulevé et le chariot 17 avec la plaque de verre disposée sur la chambre de pression 32 pénètrent dans le poste de bombage 4. Pendant le déplacement du chariot 17, la porte 60 prévue entre le poste de transfert 3 et le poste de bombage 4 est ouverte. Elle est refermée dès que le chariot 17 est parvenu dans sa position extrême dans le poste de bombage 4.

Lorsque le chariot 17 et aussi la chambre de pression 32 ont atteint leur position finale dans le poste de bombage 4, en dessous de la forme pleine 40, celle-ci est abaissée sur la plaque de verre 9 et la presse dans sa zone périphérique contre le bord supérieur 33 de la chambre de pression 32. A ce moment, du gaz sous pression est introduit par le tuyau flexible 36 dans la chambre de pression 32 et, dans cette chambre de pression 32 qui est à présent fermée de manière étanche vers le haut par la plaque de verre 9, est ainsi produite une pression statique comprise entre 400 et 2000 Pa dont la valeur dépend de la forme souhaitée du vitrage. La pression statique ne doit pas être supérieure à celle qui est nécessaire pour le bombage exact de la plaque de verre, sinon la qualité optique du vitrage final obtenu peut être défavorablement affectée. En raison de cette pression relative qui agit sur toutes les zones de la surface de la plaque de verre et qui est égale dans toutes les directions, la plaque de verre 9 est pressée uniformément sur la forme pleine 40.

Après une courte période d'action de la pression, la conduite de pression 37 est fermée. La pompe à vide 43, pendant ce temps, a été mise en fonction et la cavité 42 a été mise sous dépression, avec pour résultat que la plaque de verre 9 est maintenue contre la forme pleine par aspiration. La forme pleine 40 est, à présent, soulevée au moyen de vérins 46 en emportant le vitrage bombé maintenu par aspiration. La porte 60 est ensuite à nouveau ouverte et le chariot 17 retourne dans le poste de transfert 3. Simultanément, le chariot 24 avec le cadre de support 48 pénètrent dans le poste de bombage dans lequel la forme pleine 40 portant le vitrage 9 sont abaissés ; le vitrage 9 bombé est déposé sur le cadre de support 48. La forme pleine 40 est à nouveau soulevée et le chariot 24 amène à présent le vitrage dans le poste de trempe 5. Dès que le chariot 24 y a atteint sa position, la porte 61 entre le poste de bombage et le poste de trempe est fermée et l'air est admis dans les caissons de soufflage 52, ce qui a pour effet de soumettre le vitrage 9 à une trempe. Pendant ce temps, le chariot 17 dans le poste de transfert 3 a pris en charge la plaque de verre suivante et l'opération de bombage de la plaque de verre suivante est déjà amorcée, lorsque le chariot 24 amène le vitrage bombé trempé au poste de transfert 6. Après que le vitrage 9 ait été saisi par le dispositif de préhension 55, ce chariot 24 est prêt à recevoir le vitrage bombé suivant dans le poste de bombage.

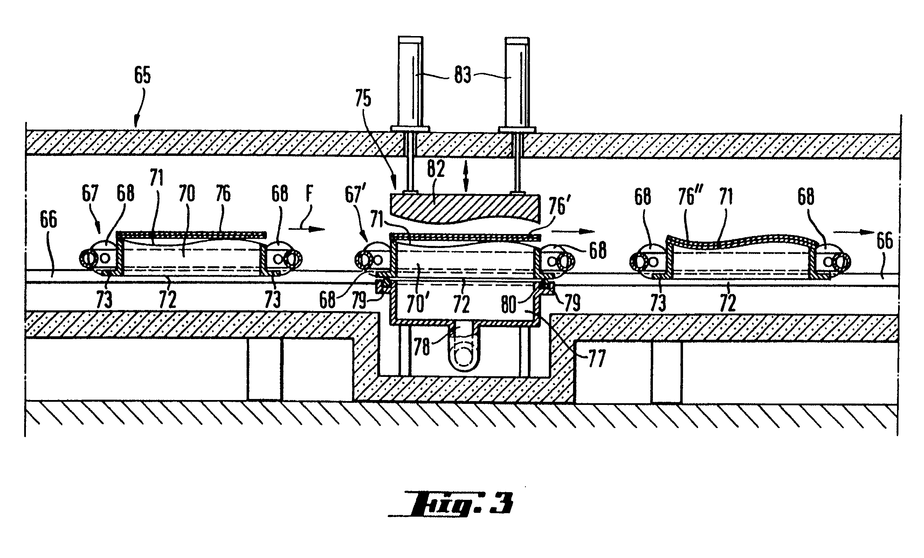

Un exemple de l'utilisation du principe de l'invention lors du bombage d'une paire de plaques de verre destinées à la fabrication d'un vitrage feuilleté, sera décrit ci-après avec référence à l'installation illustrée sur la figure 3. L'installation comprend un four continu 65 dans le sens longitudinal duquel sont prévus des rails 66 sur lesquels des chariots 67 sont déplacés sur leurs roues 68 dans le sens de la flèche F à travers le four. Chaque chariot 67 porte un cadre de bombage annulaire 70 dont le bord supérieur 71 correspond aux dimensions et à la forme des vitrages définitivement bombés. Les cadres de bombage annulaires 70 sont formés chacun par une paroi latérale fermée dont le bord inférieur 72 est disposé dans un plan et est pourvu tout autour d'une bride 73. Les chariots 67 porteurs des cadres de bombage annulaires 70 progressent pas à pas à travers l'installation.

A l'intérieur du four 65 se trouve un poste de bombage 75. Dans la partie du four 65 située avant ce poste de bombage 75, les plaques de verre 76 qui sont posées par paires sur les cadres de bombage 70, sont chauffés à la température nécessaire pour le bombage. La partie du four 65 située après le poste de bombage 75 sert à refroidir sur commande les vitrages bombés.

Dans le poste de bombage 75, en dessous du plan de transport des cadres de bombage 70, est prévue une chambre de pression fixe 77. La chambre de pression 77 est formée d'un boîtier parallélépipédique ouvert vers le haut. Une conduite 78 s'ouvre dans la chambre de pression 77 et la raccorde à un compresseur, non représenté. Au niveau de son bord supérieur, la chambre de pression présente une bride 79 dont la face supérieure est pourvue d'un joint d'étanchéité élastique 80. La bride 79 correspond quant à sa forme et ses dimensions à la bride 73 du cadre de bombage 70. Le cadre de bombage 70 peut, de cette façon être pressé de manière étanche contre le chambre de pression 77. A cet effet, la chambre de pression 77 est, par exemple, montée mobile vers le haut et vers le bas dans une faible mesure. Elle est soulevée après le positionnement du cadre de bombage 70 et pressée contre la bride 73 de ce cadre 70. Par souci de clarté, le mécanisme de soulèvement de la chambre de pression 77 n'est pas illustré sur les figures.

Lorsque l'un des chariots 67, par exemple celui référencé 67', portant les plaques de verre 76' chauffées à la température de bombage, est introduit dans le poste de bombage 75 et y est positionné, que le raccordement étanche est établi entre la chambre de pression 77 et le cadre de bombage 70, la forme pleine 82 disposée au-dessus de la chambre de pression 77 est abaissée à l'aide des vérins 83 et les plaques de verre 76' sont pressées tout le long de leurs bords contre le cadre de bombage annulaire 70'. La conduite 78 aboutissant au compresseur est à présent ouverte, de sorte qu'une pression relative de valeur réglable s'établit instantanément à l'intérieur de la chambre de pression et presse les deux plaques de verre 76' uniformément sur la totalité de leurs surfaces contre la surface de la forme pleine 82. Il en résulte que la paire de plaques de verre 76' épouse exactement la forme de cette forme de bombage pleine 82.

Contrairement aux procédés connus pour le bombage de paires de plaques de verre, dans lesquels les plaques de verre sont posées sur des cadres annulaires et épousent leur forme sous l'effet de la gravité, ce qui forcément aboutit toujours à un bombage secondaire indésirable dans la zone centrale des plaques de verre, le procédé conforme à l'invention permet de réduire sensiblement ces bombages secondaires indésirables. Il permet même de les éviter entièrement si l'on choisit la température du gaz sous pression utilisé de telle sorte que la plaque de verre inférieure de la paire 76′ soit légèrement refroidie et ce, au moins dans une mesure telle qu'après élimination de la pression de bombage et lors de la poursuite du transport des plaques de verre, un bombage desdites plaques de verre sous l'effet de leur propre poids n'ait plus lieu.

On peut aussi mettre le procédé en oeuvre en utilisant, pour le processus de bombage proprement dit, du gaz, par exemple de l'air, à une température relativement élevée et, dès que la paire de plaques de verre a épousé le profil de la forme de bombage pleine, en introduisant du gaz froid dans la chambre de pression 77 ou en mélangeant du gaz froid au gaz déjà présent ou encore en soufflant volontairement sur la surface inférieure de la paire de plaques de verre, à l'intérieur de la chambre de pression, au moyen de jets d'air froid, afin d'atteindre la solidification souhaitée de la plaque de verre inférieure. Par souci de simplicité, les conduites d'alimentation pour la chambre de pression ou pour les ajutages d'air à l'intérieur de la chambre de pression, qui sont nécessaires à cet effet, n'ont pas été représentées sur les figures.

Dès que l'opération de bombage et, le cas échéant, l'opération de refroidissement de la plaque de verre inférieure sont terminées dans le poste de bombage, la conduite de pression 78 est fermée et la forme de bombage pleine 82 est soulevée à l'aide des vérins 83. Le chariot 67′ est ensuite glissé dans la zone de refroidissement du four continu. La paire de plaques de verre 76′ présente sa forme finale et est à présent refroidie à la vitesse de refroidissement souhaitée.

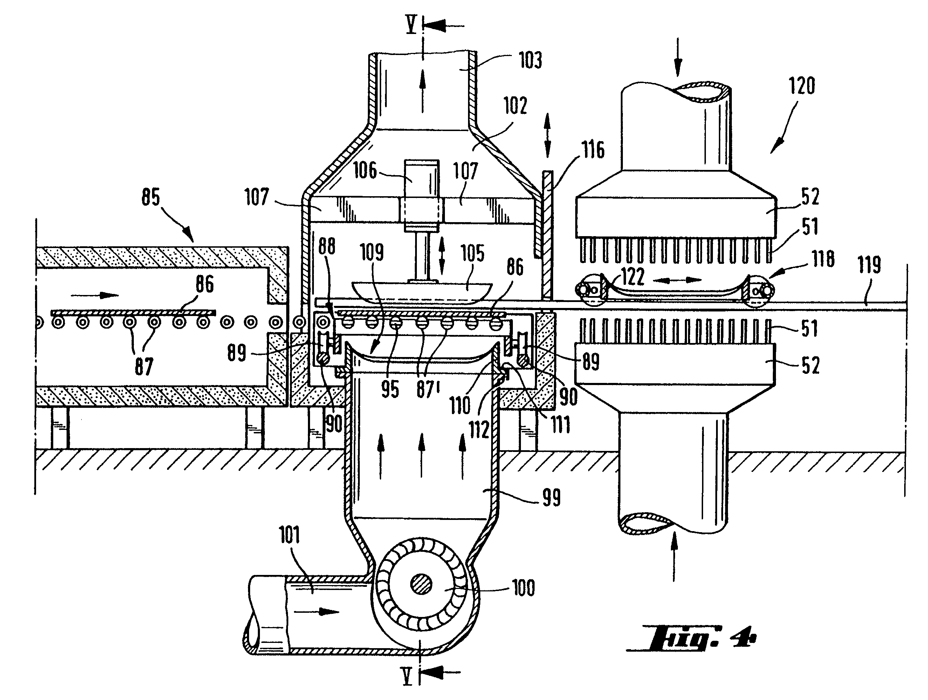

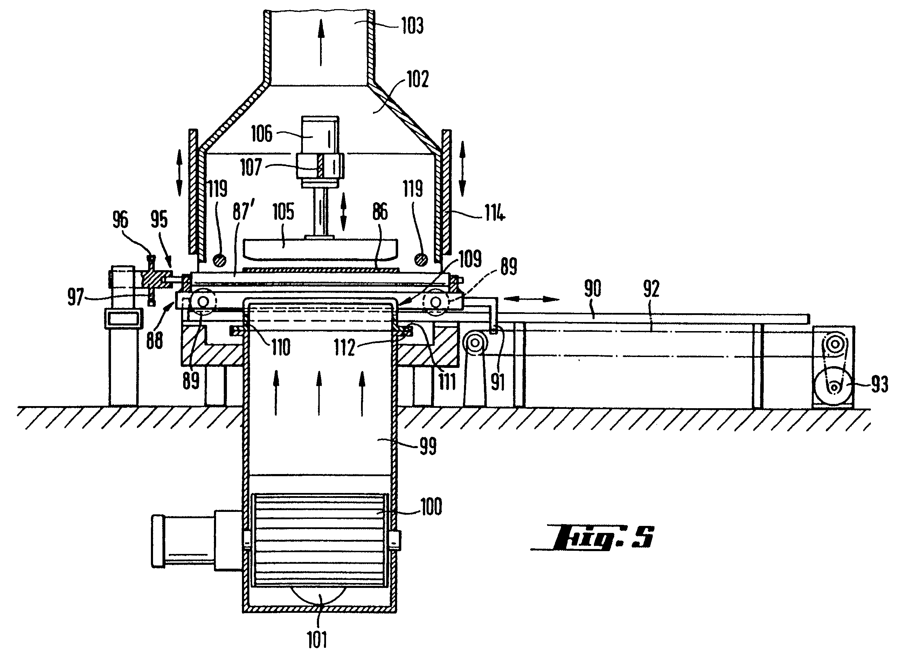

Une autre forme d'exécution du procédé conforme à l'invention est décrite avec référence aux figures 4 et 5 et convient à la fois pour le bombage de plaques de verre individuelles et pour le bombage de paires de plaques de verre. On décrira l'opération de bombage pour des plaques de verre individuelles qui seront ensuite trempées.

Le dispositif de bombage proprement dit est, dans ce cas, aussi précédé d'un four continu horizontal 85 dans lequel les plaques de verre 86 sont chauffées à la température de bombage. Le transport des plaques de verre 86 s'effectue sur des rouleaux transporteurs entraînés 87 qui s'étendent jusqu'à l'intérieur du poste de bombage. Contrairement à ce qui a été décrit pour le dispositif montré sur les figures 1 et 2, un dispositif de transfert supplémentaire n'est pas nécessaire dans ce cas pour assurer le transfert des plaques de verre chauffées, du four de chauffage au poste de bombage.

A l'intérieur du poste de bombage, les rouleaux transporteurs 87′ sont montés dans un chariot 88 déplaçable transversalement à la direction de transport des plaques de verre. Le chariot 88 est muni de roues 89 qui roulent sur des rails 90. Les rails 90 sortent d'un côté du poste de bombage. Sur ces rails 90, le chariot 88 peut être sorti complètement du poste de bombage avec les rouleaux transporteurs 87′. A cet effet, le chariot 88 est pourvu d'un taquet d'entraînement 91 qui est amené par une chaîne 92 dans une première position extrême à l'intérieur du poste de bombage et dans une deuxième position extrême à l'extérieur du poste de bombage. La chaine 92 est entraînée par le moteur 93 qui est activé par l'unité de commande centrale de l'installation.

Dans la position extrême du chariot 88 située à l'intérieur du poste de bombage, les rouleaux transporteurs 87′ sont synchronisés, par l'intermédiaire d'un accouplement séparable 95, avec l'entraînement des autres rouleaux transporteurs 87, et l'entraînement commun s'effectue par l'intermédiaire d'une chaîne 96 qui passe sur des pignons 97 montés à rotation pour leur part à l'extérieur du four ou à l'extérieur du poste de bombage.

Dans le poste de bombage, un courant d'air chaud peut être produit d'une manière telle qu'un courant d'air chaud de grande section soit dirigé verticalement de bas en haut contre les plaques de verre. A cet effet, en dessous des rouleaux transporteurs 87′ est prévu un conduit d'écoulement 99 qui est alimenté par un ventilateur 100 au moyen d'un volume prédéfini d'air chaud sous une pression prédéfinie. Dans le conduit d'aspiration 101 du ventilateur 100 sont disposés des éléments chauffants, non représentés, qui chauffent le flux d'air à une température d'environ 600°C. Au-dessus des rouleaux transporteurs 87′ est installée une hotte 102 par laquelle le flux de gaz chaud est capté et est évacué par aspiration par la conduite 103 avant d'être recyclé dans le conduit d'aspiration 101.

Dans le poste de bombage, au-dessus des rouleaux transporteurs 87′, est installée la forme de bombage à surface pleine 105. La forme de bombage 105 est montée déplaçable dans le sens vertical à l'aide du vérin 106. Le vérin 106 est fixé dans la hotte 102 à l'aide d'entretoises 107. Il est actionné par l'unité de commande centrale.

La forme de bombage à surface pleine 105 coopère avec une contre-forme annulaire 109. Cette contre-forme 109 est formée par l'extrémité supérieure d'une couronne fermée 110 qui est reliée de manière étanche par l'intermédiaire d'une bride 111 et d'une contre-bride correspondante 112 au conduit d'écoulement 99.

Lorsque la plaque de verre 86 chauffée à la température de bombage à pénétré dans le poste de bombage et y est positionnée, le ventilateur 100 est enclenché. Le flux d'air chaud ainsi produit soulève la plaque de verre 86 des rouleaux transporteurs 87' et la presse contre la surface de la forme de bombage pleine 105. Cette forme de bombage 105 est alors dans une position légèrement au-dessus du plan de la génératrice supérieure des rouleaux transporteurs 87'. Dès que la plaque de verre 86 est soulevée des rouleaux transporteurs 87', le chariot 88 est sorti du poste de bombage après ouverture de la porte 114 correspondante.

Dès que le chariot 88 est sorti avec les rouleaux transporteurs 87' du poste de bombage, le vérin 106 est actionné et la forme de bombage à surface pleine 105 est abaissée avec la plaque de verre 86. Le flux d'air chaud est, dans ce cas, maintenu de sorte que la plaque de verre 86 est pressée contre la forme de bombage 105 et maintenue contre celle-ci essentiellement grâce à la fraction dynamique de la pression du flux d'air. La plaque de verre 86 prend alors déjà partiellement le profil prédéfini par la forme de bombage 105. Seules des zones marginales fortement courbées et des formes complexes ne peuvent pas être obtenues de cette façon. C'est à présent la seconde phase de l'opération de bombage qui est utile à cet effet.

Dans cette seconde phase de bombage, la plaque de verre 86 est pressée avec la forme de bombage 105 contre la contre-forme annulaire inférieure 109. A cet effet, le conduit 99 est fermé de manière étanche à son extrémité supérieure et le flux volumique d'air chaud est interrompu. Etant donné que le ventilateur 100 est à nouveau entraîné, une pression purement statique est à présent produite à l'intérieur du conduit d'écoulement 99 et de la couronne 110. Outre la pression mécanique qui agit sur la zone marginale de la plaque de verre, une pression de gaz agissant uniformément en tout sens est ainsi produite sur l'ensemble de la surface située à l'intérieur de cette zone marginale, et cette pression presse la plaque de verre de manière étanche contre la forme de bombage à surface pleine 105. La forme de bombage 105 est avantageusement percée de trous, non représentés, qui permettent d'éviter les accumulations d'air entre le plaque de verre et la face de la forme.

Après une courte période d'action de la pression mécanique dans la zone marginale et de la pression de gaz statique, la forme de bombage 105 est soulevée à nouveau à l'aide du vérin 106 et est amenée dans sa position extrême supérieure. Le flux d'air chaud s'écoule à présent à nouveau et maintient la plaque de verre bombée contre la forme de bombage 105. La porte 116 est à présent ouverte et le chariot 118, qui peut être déplacé sur les rails 119 entre le poste de bombage, le poste de trempe 120 et un poste d'évacuation suivant, est introduit dans le poste de bombage en dessous de la forme de bombage 105.

Sur le chariot 118 est disposé un cadre de support 122 dont les dimensions et la forme correspondent au contour de la plaque de verre bombée. Cette plaque de verre 86 est à présent déposée sur ce cadre de support 122 par le fait que la forme de bombage 105 est abaissée jusqu'à une courte distance au-dessus du cadre de support 122 et que le ventilateur 100 est déclenché.

Le chariot 118 est à présent déplacé avec la plaque bombée entre les deux caissons de soufflage 122 et la plaque de verre est brutalement refroidie et ainsi trempée par les jets d'air débités par les ajutages 51. Le chariot est ensuite amené sur les rails 119 dans le poste d'évacuation où le vitrage ainsi fabriqué est enlevé du cadre de support 122 de sorte que le chariot 118 est disponible pour le cycle suivant.

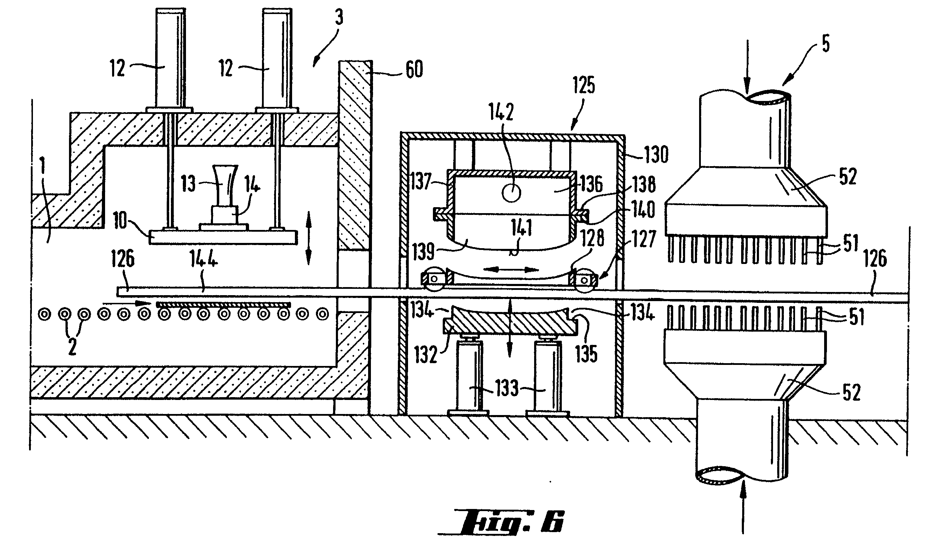

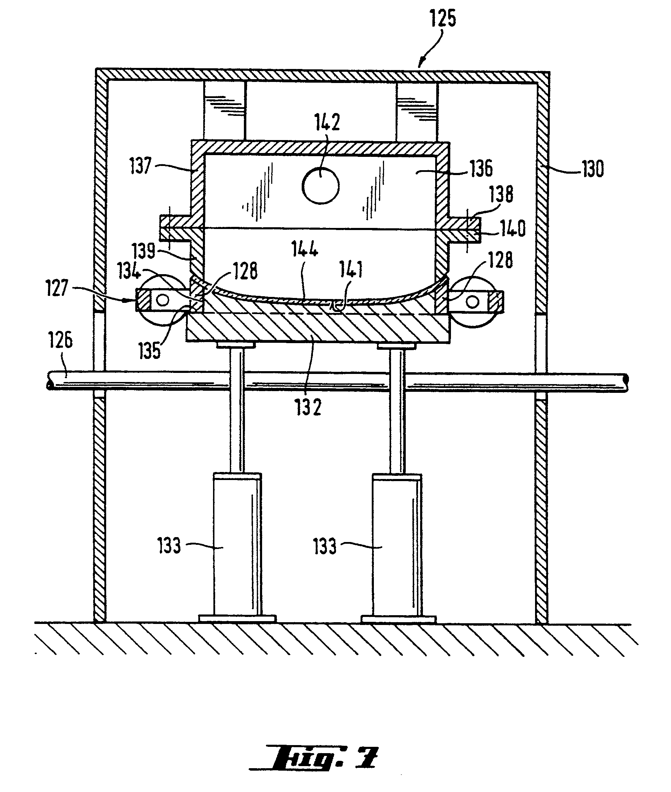

Les figures 6 et 7 illustrent finalement une autre forme d'exécution d'une installation au moyen de laquelle des vitrages de forme complexe peuvent être fabriqués conformément au procédé de l'invention.

Le four à rouleaux continu 1 et le poste de transfert 3 correspondent aux postes représentés sur les figures 1 et 2 de sorte qu'il y sera fait référence.

Le poste de transfert 3 est suivi du poste de bombage 125 lui-même suivi du poste de trempe 5 qui correspond au poste de trempe précédemment décrit avec référence à la figure 1. Les postes de traitement qui se succèdent sont traversés par des rails 126 sur lesquels se déplace un chariot 127 qui porte un cadre de support 128 correspondant à la forme périphérique du vitrage bombé.

Dans le poste de bombage 125 qui est protégé d'une manière adéquate contre les déperditions thermiques par un habillage 130 et qui, le cas échéant, peut aussi être chauffé, la forme de bombage à surface pleine 132 est montée déplaçable en hauteur en dessous du plan de transport. Le déplacement en hauteur de la forme de bombage 132 s'effectue à l'aide des vérins 133. La forme de bombage 132 est pourvue, le long de son pourtour, du côté de sa face supérieure, d'un évidement formant feuillure 134. Cet évidement 134 ainsi que le cadre de support annulaire 128 qui s'y loge sont complémentaires. Ils s'ajustent l'un dans l'autre de manière à former ensemble la surface pleine de la forme.

Au-dessus du plan de transport est disposée la chambre de pression 136. Elle est faite d'une enceinte sous pression 137 montée fixe dans l'habillage 130 et dont la face inférieure est ouverte et pourvue d'une bride 138. Une paroi périphérique 139 est fixée par sa bride 140 à cette bride 138. Le bord inférieur 141 de cette paroi 139 correspond, quant à sa forme, au bord de la face supérieure du cadre de support 128, qui lors de l'opération de pressage, sert de contre-forme. Dans la chambre de pression 136 s'ouvre la conduite 142 par laquelle le gaz chaud est introduit sous pression dans la chambre de pression.

La plaque de verre chauffée à la température de bombage est amenée dans le poste de bombage 125 au moyen du chariot 127. Dès que le chariot 127 est parvenu, dans ce poste, à sa position finale, les vérins 133, qui sont activés par l'unité de commande centrale, sont actionnés. Comme le montre la figure 7, la forme de bombage 132 s'engage, au cours de son déplacement vers le haut, dans le cadre de support 128 de telle façon que ce cadre s'ajuste dans l'évidement formant feuillure 134 et ainsi complète la forme de bombage à surface pleine. Etant donné que le cadre de support 128 prend alors appui sur l'épaulement 135 de l'évidement 134, lors du déplacement vers le haut de la forme de bombage 132 qui se poursuit, le cadre de support 128 monte en compagnie du chariot 127 étant donné qu'il est relié rigidement à celui-ci. La plaque de verre 144 posée sur le cadre de support 128 est, de cette façon, pressée entre le bord inférieur 141 formant cadre de la paroi 139 et le cadre de support 128. La chambre de pression 36 est ainsi fermée de manière étanche.

En introduisant de l'air chaud sous pression par la conduite 42 dans la chambre de pression 136, on produit, à présent, une pression statique qui est suffisante pour presser la plaque de verre 144, sur la totalité de sa surface, sous une pression uniforme, contre la surface de la forme 132. Au terme de cette opération de pressage, d'une durée de quelques secondes, la conduite 142 est à nouveau fermée et la forme à surface pleine 132 est à nouveau abaissée à l'aide des vérins 133. Lors du déplacement vers le bas de la forme à surface pleine 132, le chariot 137 est à nouveau posé sur les rails 126. La forme pleine poursuit son déplacement vers le bas jusqu'à ce qu'elle ait complètement libéré le chariot 127 qui part à présent vers le poste de trempe 5 où la plaque de verre 144 posée sur le cadre de support est soumise à une trempe à l'aide des deux caissons de soufflage 152 qui sont chacun pourvu d'ajutages de soufflage 51.

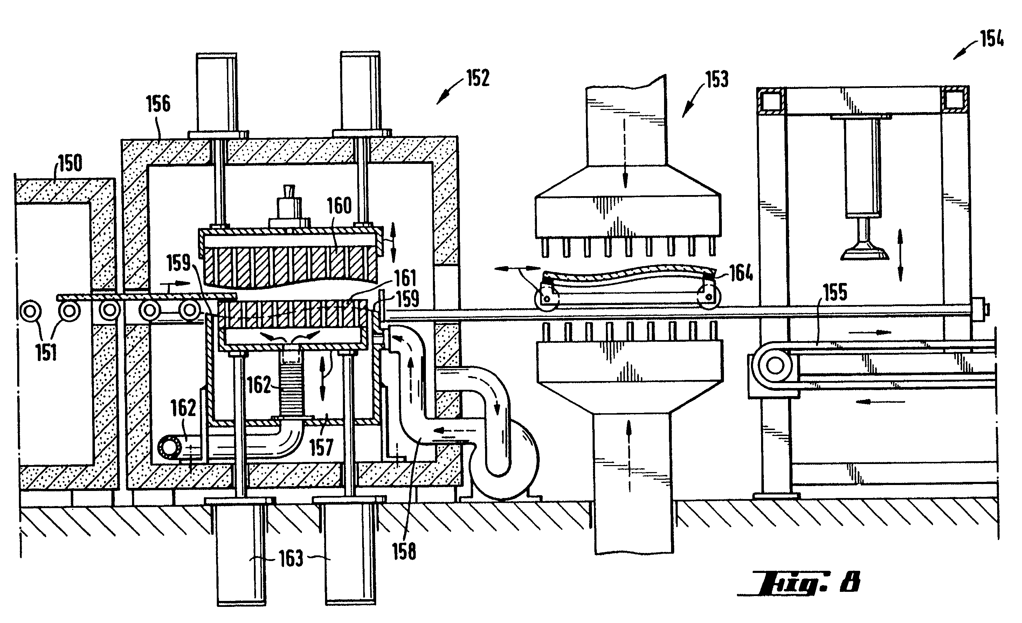

La figure 8 illustre encore un autre mode de réalisation facilitant le transfert des plaques de verre du four au poste de bombage et autorisant aussi bien le traitement de plaques individuelles que de plaques associées par paire.

Comme montré figure 8, l'installation comprend un four continu horizontal 150 dans lequel des plaques de verre sont chauffées à la température de bombage sur un transporteur horizontal 151 par exemple à rouleaux, un poste de bombage 152, un poste de traitement thermique 153 par exemple poste de trempe comme montré sur la figure, ou poste de recuisson selon les vitrages que l'on désire fabriquer, et un poste de transfert 154 dans lequel les vitrages terminés résultant du bombage et de la trempe ou de la recuisson des plaques de verre sont transférés sur un dispositif transporteur 155, par exemple vers un poste de contrôle, d'emballage, d'assemblage, de feuilletage ou autre.

Le transporteur horizontal 151 se prolonge jusqu'au début du poste de bombage 152 délimité par un habillage 156 isolant comme déjà expliqué en relation avec les autres modes de réalisation.

Ce poste de bombage 152 renferme aussi une chambre de pression 157 en forme de caisson, dont la face supérieure est ouverte mais dont les autres côtés sont fermés. Cette chambre de pression 157 est alimentée en gaz sous pression chaud par la tubulure 158. Le bord supérieur 159 de cette chambre 157 constitue un cadre annulaire de formage dont la forme et les dimensions correspondent à celles désirées pour le vitrage bombé. Ce cadre annulaire est l'élément inférieur de la presse de bombage dont l'élément supérieur est une forme pleine 160 disposée au-dessus de la chambre 157. Comme dans les réalisations précédentes, en particulier celle illustrée par la figure 1, la forme pleine 160 est aspirante et elle est montée de façon à pouvoir se déplacer verticalement. A l'intérieur de la chambre de pression 157 est disposée une table à coussin gazeux 161 alimentée en gaz sous pression chaud par une tubulure 162. Cette table 161 est montée mobile en hauteur à l'intérieur de la chambre 157 grâce à des vérins 163.

Intervient également dans ce poste de bombage 152 un cadre annulaire de transfert 164 destiné à récupérer la plaque de verre après son bombage et à la transférer au poste suivant, poste de trempe ou de recuisson.

Sont également prévus pour supporter les bords de certaines feuilles de verre lors de leur avancée pour aller se placer au-dessus de la table 161, des éléments latéraux à coussin gazeux, non représentés, disposés à l'extérieur du contour de la chambre de pression 157.

Cette installation fonctionne comme décrit ci-après. Une plaque de verre réchauffée à la température voulue de bombage à l'intérieur du four 150 chemine sur le transporteur à rouleaux 151 jusque dans le poste de bombage 152, accoste sur la table 161 à coussin gazeux amenée par action des vérins 163 à une hauteur telle qu'elle constitue un prolongement au transporteur 151. Avant d'être arrêtée au-dessus de la table à coussin gazeux 161, la plaque de verre chemine en appuyant éventuellement ses bords lorsque nécessaire sur les éléments latéraux de support à coussin gazeux disposés latéralement à l'extérieur du contour défini par le cadre 159. Une fois arrêtée au-dessus de la table 161, la plaque de verre est positionnée avec exactitude grâce à des systèmes de positionnement non représentés, tels par exemple des poussoirs latéraux et/ou longitudinaux par exemple solidaires des parois de la chambre 157 ou de la table 161.

La table 161 s'escamotte ensuite en étant abaissée à l'intérieur de la chambre de pression 157 grâce aux vérins 163 et la plaque de verre se trouve alors prise en charge par le bord supérieur 159 de ladite chambre 157, formant cadre annulaire.

L'élément supérieur de la presse constitué par la forme pleine 160 est alors descendu et vient s'appliquer sur la plaque de verre. Simultanément la pression est appliquée dans la chambre de pression 157 par l'intermédiaire de l'air chaud envoyé par la tubulure 158.

Comme déjà indiqué en relation avec les autres modes de réalisation, la plaque de verre est ainsi conformée au profil voulu ; grâce à la pression en partie supérieure de la forme pleine 160, à la pression statique du gaz chaud en partie inférieure dans la zone centrale de la plaque de verre, à la zone d'appui que constitue le cadre 159. Après un certain temps de pressage de l'air froid peut être envoyé dans la chambre de pression pour favoriser le durcissement de la plaque de verre.

La plaque de verre étant bombée, la forme pleine 160 est relevée, tandis qu'une dépression est appliquée à travers elle, ce qui permet de soulever en même temps la plaque de verre bombée.

Le cadre de transfert 164 pénètre alors dans le poste de bombage 152 et vient se placer au-dessous de la plaque de verre bombée soutenue par la forme pleine 160. La dépression au travers de cette forme pleine 160 est coupée et il en résulte le lâcher de la plaque de verre sur le cadre 164. Le cadre 164 chargé de la plaque de verre sort du poste de bombage et la transfert au poste suivant 153 poste de trempe ou de recuisson. Après celà le vitrage bombé et trempé ou recuit est livré au poste de transfert 154.

Dans la mesure où l'on veut bomber deux plaques de verre devant entrer dans la composition d'un vitrage feuilleté, le cadre 164 chargé d'une première plaque de verre, sorti du poste de bombage attend dans une enceinte chauffée contigue au poste de bombage. Pendant ce temps une deuxième plaque de verre est dans le poste de bombage en train de subir le traitement de bombage. Quand elle est bombée, que la forme pleine 160 est remontée en maintenant par aspiration ladite seconde plaque de verre sous elle, le cadre 164 chargé de la première plaque de verre déjà bombée, rentre à nouveau dans le poste de bombage, et vient se placer sous la forme pleine 160 pour recevoir la seconde plaque de verre.

Les deux plaques de verre ainsi superposées en atmosphère chaude peuvent si besoin est, s'épouser parfaitement de façon à avoir exactement la même courbure.

Le cadre 164 ainsi chargé des deux plaques de verre est alors transféré au poste de traitement thermique 153 qui fait suite, poste de recuisson en général dans le cas de plaques de verre destinées à constituer un vitrage feuilleté.

Lorsqu'il s'agit de bomber deux plaques de verre destinées à constituer un vitrage feuilleté, en variante on peut utiliser une forme pleine supérieure 160 associée à un caisson d'aspiration avec des parois latérales formant jupe et entourant ladite forme pleine en réservant toutefois un espace au travers duquel s'exerce la dépression entre la jupe et la forme pleine comme décrit dans les documents de brevets antérieurs publiés sous les numéros FR 2085464, EP 240418, EP 241355.

Cette variante n'est pas illustrée sur les figures.

Grâce à un tel système, les deux plaques de verre superposées peuvent être entrées dans le poste de bombage disposées sur la table 161, bombées par pressage et action de la pression statique de gaz chaud, puis soulevées toutes deux ensemble lorsque la forme supérieure est relevée, puis déposées sur le cadre de transfert 164.

Cette installation selon la figure 8 et sa variante ne font pas appel à un dispositif de préhension des plaques de verre pour les faire passer du four 150 au poste de bombage 152.

Il en résulte une simplification, l'absence de manipulations susceptibles d'induire des marques, défauts, également la possibilité de travailler des plaques de verre portant un dépôt d'émail en face supérieure, dépôt qui au moment du transfert du four au poste de bombage est encore liquide, fragile. Quelques instants plus tard au moment du pressage dans le poste de bombage, l'émail a en plus le temps pour se solidifier et se durcir, il est donc plus apte à entrer en contact avec la forme pleine supérieure 160.

## Revendications

1. Procédé pour bomber des plaques de verre (9, 76, 86, 144), dans lequel les plaques de verre (9, 76, 86, 144) sont chauffées dans une position horizontale dans un four continu (1, 65, 85, 150) à la température de bombage et sont pressées dans un poste de bombage (4, 75, 125, 152) adjacent au four continu (1, 65, 85, 150) à l'aide d'un cadre annulaire (33, 70, 109, 159, 141) contre une forme de bombage à surface pleine (40, 82, 105, 132, 160) puis sont amenées dans un poste de refroidissement (5, 120, 153) au moyen d'un cadre de support, **caractérisé en ce que** les plaques de verre (9, 76, 86, 144) dans le poste de bombage (4, 75, 125, 152), pendant le pressage entre le cadre annulaire (33, 70, 109, 141, 159) et la forme à surface pleine (40, 82, 105, 132, 160) sont pressées par la pression statique d'un gaz chaud dans la zone située à l'intérieur du cadre annulaire (33, 70, 109, 141, 159) contre la forme de bombage à surface pleine (40, 82, 105, 132, 160), la pression statique étant produite dans une chambre de pression (32, 77, 136, 157) dont la face d'extrémité est délimitée par le cadre annulaire (33, 70, 109, 141, 159) et est fermée par la plaque de verre (9, 76, 86, 144) appliquée de manière étanche contre ce cadre annulaire (33, 70, 109, 141, 159).

2. Procédé suivant la revendication 1, **caractérisé en ce que** la valeur de la pression statique agissant sur le vitrage est comprise entre 400 et 2000 Pa.

3. Procédé suivant la revendication 1 ou 2 **caractérisé en ce que** les plaques de verre (9), disposées dans le four continu (1) sur un transporteur formé de rouleaux transporteurs successifs (2) entraînés, sont chauffées à la température de bombage et sont soulevées du transporteur, à l'extrémité du four continu (1) ou dans un poste de transfert (3) qui suit le four continu (1), à l'aide d'un plateau-ventouse (10) mobile vers le haut et vers le bas et déposées sur l'élément inférieur (33, 132) de la presse de bombage.

4. Procédé suivant la revendication 3 **caractérisé en ce que** l'élément inférieur (33) de la presse de bombage constitue la face d'extrémité de la chambre de pression (32), le passage étant obtenu en abaissant la forme supérieure (40).

5. Procédé suivant la revendication 3 **caractérisé en ce que** l'élément inférieur (132) de la presse de bombage constitue la forme à surface pleine mobile de bas en haut, que l'on vient soulever pour presser la feuille de verre contre le cadre annulaire (141) constituant la face d'extrémité inférieure de la chambre de pression (136).

6. Procédé suivant la revendication 1 ou 2, **caractérisé en ce que** les plaques de verre (76) posées sur un cadre annulaire (70) sont transportées avec ce cadre (70) à travers le four continu (65) et sont chauffées à la température de bombage, la face inférieure (72) de ce cadre annulaire (70) étant alors reliée de manière étanche par sa partie inférieure, en vue du bombage, à la chambre de pression (77).

7. Procédé suivant la revendication 6, **caractérisé en ce qu'**une paire de plaques de verre (76) à traiter ultérieurement pour former un vitrage de sécurité est posée sur le cadre annulaire (70) et est bombée en une seule opération.

8. Procédé suivant la revendication 1 ou 2, **caractérisé en ce que** les plaques de verre (86) sont transportées sur un transporteur formé de rouleaux transporteurs (87) entraînés successivement à travers le four continu (85) et dans le poste de bombage et, dans ce poste de bombage, chacune est soulevée au dessus des rouleaux transporteurs (87) par un courant de gaz chaud débité par un conduit d'écoulement (99) orienté verticalement et est pressée contre la forme de bombage à surface pleine (105) mobile vers le haut et vers le bas au dessus des rouleaux transporteurs, les rouleaux transporteurs (87') disposés dans la zone de bombage sont évacués et la forme de bombage à surface pleine (105) avec la plaque de verre (86) est alors pressée contre une contre forme annulaire inférieure (109) constituée par l'extrémité supérieure du conduit d'écoulement (99) délivrant le courant de gaz, une chambre de pression dans laquelle s'exerce la pression statique du courant de gaz délimitée par les parois du conduit d'écoulement (99) du courant de gaz chaud étant ainsi formée.

9. Procédé selon la revendication 1 ou 2, **carac-**

**térisé en ce que** les plaques de verre sont supportées dans le poste de bombage (152) sur une table à coussin gazeux (161), puis à la suite d'un déplacement relatif de cette table (161), elles sont prises en charge par ce cadre annulaire (159) et pressées entre la forme pleine (160) et le cadre annulaire (159) avec application de la pression statique de gaz chaud délivré dans la chambre de pression (157).

10. Procédé selon la revendication 9, **caractérisé en ce qu'**après le bombage, une plaque de verre bombée est maintenue par aspiration par la forme pleine (160) qui remonte, en ce qu'un cadre est amené sous la forme pleine (160) et récupère la plaque de verre bombée, en ce que ce cadre (164) avec la plaque de verre est mis en attente dans une enceinte chauffée (154) pendant qu'une seconde plaque de verre est soumise au bombage, en ce qu'après bombage de cette seconde plaque de verre, le cadre (164) chargé de la première plaque de verre vient récupérer la seconde plaque de verre qui se superpose ainsi à la première.

11. Procédé selon la revendication 9, **caractérisé en ce que** la forme à surface pleine (160) étant associée à une jupe l'entourant avec un espace par où s'exerce l'aspiration entre surface pleine et jupe, deux plaques de verre superposées sont pressées simultanément puis remontées avec la forme pleine (160) en étant maintenues contre elle avant d'être déposées sur un cadre (164) introduit dans le poste de bombage (152).

12. Procédé selon l'une des revendications précédentes, **caractérisé en ce qu'**après bombage mettant en oeuvre une pression statique de gaz chauds sous pression dans une chambre de pression, des gaz froids sont envoyés dans la chambre de pression conduisant au durcissement du verre.

13. Installation pour réaliser le procédé suivant la revendication 1 comportant un four continu (1, 65, 85, 150), un poste de bombage (4, 75, 125, 152) dans lequel est disposée une forme de bombage à surface pleine (40, 82, 105, 132, 160), un poste de refroidissement (5, 120, 153) et un cadre de support amenant les feuilles de verre bombées du poste de bombage (4, 75, 125, 152) au poste de refroidissement **caractérisée en ce qu'**elle comporte en outre une chambre de pression (32, 77, 136, 157) pouvant être mise sous pression au moyen d'un gaz chaud, dont la face d'extrémité est délimitée par un cadre annulaire (33, 70, 109, 141, 159) coopérant avec la forme de bombage à surface pleine (40, 82, 105, 132, 160) pour le pressage des feuilles de verre.

14. Installation selon la revendication 13 **caractérisée par** un transporteur formé de rouleaux (2, 87, 151) pour le transport des feuilles de verre au travers du four continu (1, 85, 150) et en ce que la forme de bombage à surface pleine (40, 105, 160), disposée au dessus du plan de transport des feuilles de verre, est mobile vers le haut et vers le bas, le cadre annulaire inférieur (33, 109, 159) étant formé par le bord supérieur de la paroi de la chambre de pression (32, 157).

15. Installation selon la revendication 14 **caractérisée en ce que** la forme de bombage à surface pleine supérieure (40, 160) est une forme aspirante contre laquelle, après l'opération de bombage, la plaque de verre bombée (9) est maintenue par aspiration jusqu'à ce qu'elle soit prise en charge par un cadre de support (48, 164) disposé sur un chariot déplaçable (24) en vue d'être par la suite transportée dans le poste suivant.

16. Installation selon la revendication 14 ou 15 **caractérisée par** un poste de transfert (3) dans la partie avale du four (1) et un chariot (17) déplaçant la chambre de pression (32) entre ce poste de transfert (3) et le poste de bombage (4).

17. Installation selon la revendication 13 **caractérisée par** un transporteur formé de rouleaux (2) pour le transport des feuilles de verre au travers du four continu (1) et en ce que la forme de bombage à surface pleine (132), disposée sous le plan de transport des feuilles de verre, le cadre de bombage annulaire (141) est formé par le bord inférieur de la chambre de pression (136), la partie annulaire (128) de la forme de bombage à surface pleine (132), venant en contact avec la zone marginale de la plaque de verre, pouvant être séparée et déplacée en tant que cadre de transport après l'opération de bombage.

18. Installation selon la revendication 17 **caractérisée en ce que** ladite partie annulaire (128) peut en outre être déplacée dans un poste de transfert (3) en vue de prendre en charge les plaques de verre chauffées à la température de bombage.

19. Installation selon la revendication 17 ou 18, **caractérisée en ce que** la forme à surface pleine inférieure (132) comporte un épaulement (135) qui retient le cadre annulaire (128), en ce que l'ensemble peut être soulevé pour être amené contre le gond inférieur (141) de la chambre de pression supérieure (136) et peut être abaissé pour désolidariser le cadre annulaire (128) de la forme à surface pleine inférieure (132).

20. Installation selon la revendication 14 **caractérisée en ce que** le transporteur se prolonge jusque dans le poste de bombage, les rouleaux transporteurs (87') disposés à l'intérieur du poste de bombage étant montés sur un chariot déplaçable (88) qui peut être sorti latéralement du poste de bombage après le soulèvement de la plaque de verre (86) au dessus des rouleaux transporteurs (87').

21. Installation selon la revendication 20 **caractérisée en ce que** les rouleaux transporteurs (87') peuvent être reliés au mécanisme d'entraînement (96) des rouleaux transporteurs (87) précédents par un accouplement séparable (95).

22. Installation selon la revendication 20 ou 21 **caractérisée par** la disposition sous les rouleaux transporteurs (87') d'un conduit d'écoulement vertical (99), équipé d'un ventilateur (100) produisant un courant de gaz chaud, dont le bord supérieur constitue le cadre annulaire (109), étant entendu que le conduit d'écoulement (99), après le pressage d'une plaque de verre (86) par la forme de bombage à surface pleine supérieure (105) sert de chambre de pression maintenue sous pression statique.

23. Installation selon la revendication 22 **caractérisée par** un cadre de support (122) introduit dans le poste de bombage (105) pour récupérer la plaque de verre bombée et la transporter au poste de refroidissement, lorsque après bombage la forme pleine supérieure (105) est remontée et que le courant gazeux s'écoulant vers le haut continu de s'exercer et maintient la plaque de verre appliquée contre ladite forme pleine supérieure (105).

24. Installation selon l'une des revendications 14 à 23 **caractérisée en ce que** le cadre de bombage annulaire (33, 109, 141, 159) a la forme d'une couronne comportant une bride (111, 140) raccordée à la partie fixe (99, 137) de la chambre de pression (32, 136, 157).

25. Installation selon la revendication 13 ou 14 **caractérisée en ce qu'**elle comporte une table à coussin gazeux (161) disposée dans le poste de bombage (152), à l'intérieur de la chambre de pression (32) à hauteur relative par rapport au bord supérieur formant cadre (159) de la chambre de pression (157), permettant ainsi à la suite d'un mouvement relatif, la prise en charge de la plaque de verre à bomber par ledit bord supérieur formant cadre (159).

26. Installation selon la revendication 25, **caractérisée en ce que** la forme supérieure pleine (160) est associée à une jupe l'entourant tout en réservant entre ladite jupe et ladite forme supérieure un espace par où s'exerce l'aspiration.

27. Installation selon la revendication 13 **caractérisée par** des cadres de bombage annulaires (70) pour le transport des plaques de verre (76) à travers le four continu (65), le poste de bombage (75) dans lequel est disposée une forme de bombage à surface pleine supérieure (82) et le poste de refroidissement, lesdits cadres de bombage annulaires (70) comportant des parois latérales fermées et une bride inférieure (79) coopérant de manière étanche avec la chambre de pression (77) disposée sous le plan de transport).

**Patentansprüche**

1. Verfahren zum Biegen von Glasscheiben (9, 76, 86, 144), bei dem die Glasscheiben (9, 76, 86, 144) in horizontaler Lage in einem Durchlaufofen (1, 65, 85, 150) auf Biegetemperatur erwärmt und in einer sich an den Durchlaufofen (1, 65, 85, 150) anschließenden Biegestation (4, 75, 125, 152) mit Hilfe einer Ringform (33, 70, 109, 159, 141) gegen eine vollflächige Biegeform (40, 82, 105, 132, 160) gepreßt und anschließend mit Hilfe eines Tragrings in eine Kühlstation (5, 120, 153) verbracht werden, **dadurch gekennzeichnet,** daß die Glasscheiben (9, 76, 86, 144) in der Biegestation (4, 75, 125, 152) während des Pressens zwischen der Ringform (33, 70, 109, 141, 159) und der vollflächigen Form (40, 82, 105, 132, 160) im Bereich innerhalb der Ringform (33, 70, 109, 141, 159) durch den statischen Druck von unter Überdruck stehendem heißem Gas gegen die vollflächige Biegeform (40, 82, 105, 132, 160) gepreßt werden, wobei der statische Überdruck in einer Druckkammer (32, 77, 136, 157) erzeugt wird, deren Abschlußfläche durch die Ringform (33, 70, 109, 141, 159) begrenzt wird, und die durch die an dieser Ringform (33, 70, 109, 141, 159) dicht anliegende Glasscheibe (9, 76, 86, 144) geschlossen wird.

2. Verfahren nach Anspruch 1, dadurch gekennzeichnet, daß die Höhe des auf die Glasscheibe wirkenden statischen Druckes zwischen 400 und 2000 Pa beträgt.

3. Verfahren nach Anspruch 1 oder 2, dadurch gekennzeichnet, daß die Glasscheiben (9) in dem Durchlaufofen (1) auf einer aus aufeinanderfolgenden angetriebenen Transportwalzen (2) bestehenden Transportbahn auf die Biegetemperatur erwärmt und am Ende des Durchlaufofens (1) oder in einer sich an den Durchlaufofen (1) anschließenden Übergabestation (3) mit Hilfe einer auf- und abwärts bewegbaren Saugplatte (10) von der Transportbahn abgehoben und auf das untere Element (33, 132) der Biegepresse abgelegt werden.

4. Verfahren nach Anspruch 3, dadurch gekennzeichnet, daß das untere Element (33) der Biegepresse die Abschlußfläche der Druckkammer (32) bildet und die Übergabe durch Absenken der oberen Form (40) erfolgt.

5. Verfahren nach Anspruch 3, dadurch gekennzeichnet, daß das untere Element (132) der Biegepressse die vollflächige, von unten nach oben bewegbare Biegeform bildet, die angehoben wird, um die Glasscheibe gegen die die untere Abschlußfläche der Druckkammer (136) bildende Ringform (141) zu pressen.

6. Verfahren nach Anspruch 1 oder 2, dadurch gekennzeichnet, daß die auf einem ringförmigen Rahmen (70) liegenden Glasscheiben (76) mit dem Rahmen (70) durch den Durchlaufofen (65) transportiert und auf die Biegetemperatur erwärmt werden, und daß die untere Seite (72) dieses ringförmigen Rahmens (70) durch ihren unteren Teil zum Biegen dicht mit der Druckkammer (77) verbunden wird.

7. Verfahren nach Anspruch 6, dadurch gekennzeichnet, daß ein Paar von Glasscheiben (76), das später zur Bildung einer Sicherheitsglasscheibe weiterverarbeitet wird, auf den ringförmigen Rahmen (70) aufgelegt und gemeinsam gebogen wird.

8. Verfahren nach Anspruch 1 oder 2, dadurch gekennzeichnet, daß die Glasscheiben (86) auf einer aus aufeinanderfolgenden angetriebenen Transportwalzen (87) bestehenden Transportbahn durch den Durchlaufofen (85) und in die Biegestation transportiert, und in der Biegestation jede Glasscheibe durch einen von unten gegen die Glasscheiben gerichteten, durch einen vertikal ausgerichteten Strömungskanal (99) strömenden heißen Gasstrom von den Transportwalzen (87) abgehoben und gegen die oberhalb der Transportwalzen heb- und senkbar angeordnete vollflächige Biegeform (105) gepreßt wird, daß die in der Biegezone angeordneten Transportwalzen (87') herausgefahren, und daß die vollflächige Biegeform (105) mit der Glasscheibe (86) gegen eine ringförmige untere Gegenform (109) gepreßt wird, die von der oberen Abschlußfläche des den Gasstrom liefernden Strömungskanals (99) gebildet wird, der dadurch eine Druckkammer bildet, in der der statische Druck des von den Wänden des Strömungskanals (99) begrenzten Gasstroms wirkt.

9. Verfahren nach Anspruch 1 oder 2, dadurch gekennzeichnet, daß die Glasscheiben in der Biegestation (152) von einem Gaskissentisch (161) getragen werden, dann infolge einer Relativbewegung dieses Tisches (161) von der Ringform (159) übernommen und zwischen der Vollform (160) und der Ringform (159) unter Anwendung des statischen Druckes des heißen Gases in der Druckkammer (157) gepreßt werden.

10. Verfahren nach Anspruch 9, dadurch gekennzeichnet, daß nach dem Biegen eine gebogene Glasscheibe durch Ansaugen von der vollflächigen Form (160) festgehalten wird, daß die vollflächige Form angehoben wird, daß ein Rahmen (164) unter die vollflächige Form (160) verbracht wird und die gebogene Glasscheibe übernimmt, daß der Rahmen (164) mit der Glasscheibe in einen beheizten Behälter (154) in Wartestellung verbracht wird, währenddessen eine zweite Glasscheibe gebogen wird, und daß nach dem Biegen der zweiten Glasscheibe der die erste Glasscheibe tragende Rahmen (164) die zweite Glasscheibe aufnimmt, die sich auf die erste Glasscheibe legt.

11. Verfahren nach Anspruch 9, dadurch gekennzeichnet, daß die vollflächige Form (160) mit einer diese umgebenden Schürze mit einem Zwischenraum versehen ist, durch den zwischen der vollflächigen Form und der Schürze die Saugwirkung ausgeübt wird, daß zwei übereinanderliegende Glasscheiben gleichzeitig gepreßt, an der vollflächigen Form (160) gehalten und mit dieser angehoben und anschließend auf einen Rahmen (164) abgelegt werden, der in die Biegestation (152) eingeführt wird.

12. Verfahren nach einem der voraufgehenden Ansprüche, dadurch gekennzeichnet, daß nach dem Biegen mit Hilfe eines statischen Drucks eines heißen Gases in der Druckkammer kaltes Gas in die Druckkammer eingeleitet wird, das zu einer Härtung des Glases führt.

13. Einrichtung zur Durchführung des Verfahrens nach Anspruch 1, mit einem Durchlaufofen (1, 65, 85, 150), einer Biegestation (4, 75, 125, 152), in der eine vollflächige Biegeform (40, 82, 105, 132, 160) angeordnet ist, einer Kühlstation (5, 120, 153) und einem Tragrahmen zum Überführen der gebogenen Glasscheiben von der Biegestation (4, 75, 125, 152) zu der Kühlstation, dadurch gekennzeichnet, daß sie eine mittels eines heißen Gases unter Druck setzbare Druckkammer (32, 77, 136, 157) umfaßt, deren Abschlußfläche von einem ringförmigen Rahmen (33, 70, 109, 141, 159) begrenzt ist, der mit der vollflächigen Biegeform (40, 82, 105, 132, 160) zum Pressen der Glasscheiben zusammenwirkt.

14. Einrichtung nach Anspruch 13, gekennzeichnet durch einen von Rollen (2, 87, 151) gebildeten Förderer für den Transport der Glasscheiben durch den Durchlaufofen (1, 85, 150), und dadurch, daß die oberhalb der Transportebene der Glasscheiben angeordnete vollflächige Biegeform (40, 105, 160) aufwärts und abwärts bewegbar ist, und daß die untere Ringform (33, 109, 159) durch den oberen Rand der Hand der Druckkammer (32, 157) gebildet wird.

15. Einrichtung nach Anspruch 14, dadurch gekennzeichnet, daß die vollflächige obere Biegeform (40, 160) eine Saugform ist, an der die gebogene Glasscheibe (9) nach dem Biegevorgang durch Ansaugen festgehalten wird, bis sie von einem auf einem verfahrbaren Wagen (24) angeordneten Tragrahmen (48, 164) übernommen wird, um sie danach in die darauffolgende Station zu transportieren.

16. Einrichtung nach Anspruch 14 oder 15, gekennzeichnet durch eine Übergabestation (3) in dem stromabwärtigen Teil des Ofens (1) und durch einen die Druckkammer (32) zwischen der Übergabesation (3) und der Biegestation (4) verfahrenden Wagen (17).

17. Einrichtung nach Anspruch 13, gekennzeichnet durch einen Rollenförderer (2) für den Transport der Glasscheiben durch den Durchlaufofen (1), und dadurch, daß die vollflächige Biegeform (132) unterhalb der Transportebene der Glasscheiben angeordnet ist, der ringförmige Biegerahmen (141) durch den unteren Rand der Biegekammer (136) gebildet wird und der mit der Randzone der Glasscheibe in Kontakt kommende ringförmige Teil (128) der vollflächigen Biegeform (132), lösbar und als Transportrahmen nach dem Biegevorgang verfahrbar ist.

18. Einrichtung nach Anspruch 17, dadurch gekennzeichnet, daß der ringförmige Teil (128) in die Übergabestation (3) verfahrbar ist, um die auf Biegetemperatur erwärmten Glasscheiben zu übernehmen.

19. Einrichtung nach Anspruch 17 oder 18, dadurch gekennzeichnet, daß die untere vollflächige Biegeform (132) eine den ringförmigen Rahmen (128) aufnehmende Schulter (135) aufweist und zusammen mit dem Rahmen gegen die untere Randfläche (141) der oberen Biegekammer (136) angehoben und zum Lösen des ringförmigen Rahmens (128) von der vollflächigen Biegeform (132) abgesenkt werden kann.

20. Einrichtung nach Anspruch 14, dadurch gekennzeichnet, daß der Förderer sich bis in die Biegestation hinein fortsetzt und die innerhalb der Biegestation angeordneten Förderrollen (87') auf einem verfahrbaren Wagen (88) montiert sind, der nach Abbheben der Glasscheibe (86) von den Förderrollen (87') seitlich aus der Biegestation herausgefahren werden kann.

21. Einrichtung nach Anspruch 20, dadurch gekennzeichnet, daß die Förderrollen (87') durch eine trennbare Kupplung (95) mit dem Antriebsmechanismus (96) der Förderrollen (87) verbunden werden können.

22. Einrichtung nach Anspruch 20 oder 21, gekennzeichnet durch die Anordnung eines vertikalen Strömungskanals (99) unterhalb der Transportrollen (87'), der mit einem einen heißen Gasstrom liefernden Gebläse (100) versehen ist und dessen oberer Rand den ringförmigen Rahmen (109) bildet, wobei der Strömungskanal (99) nach dem Pressen einer Glasscheibe (86) mit Hilfe der vollflächigen oberen Biegeform (105) unter statischem Überdruck gehalten wird und als Biegekammer dient.

23. Einrichtung nach Anspruch 22, gekennzeichnet durch einen Tragrahmen (122), der in die Biegestation (105) eingeführt wird, um die gebogene Glasscheibe aufzunehmen und sie zur Kühlstation zu transportieren, wenn die obere vollflächige Biegeform (105) wieder angehoben ist und der aufwärts strömende Gasstrom weiterwirkt und die Glasscheibe an der oberen vollflächigen Form (105) festhält.

24. Einrichtung nach einem der Ansprüche 14 bis 23, dadurch gekennzeichnet, daß der ringförmige Biegerahmen (33, 109, 141, 159) die Form eines einen Flansch (111, 140) aufweisenden Kranzes hat, wobei der Flansch mit dem festen Teil (99, 137) der Druckkammer (32, 136, 157) verbunden wird.

25. Einrichtung nach Anspruch 13 oder 14, dadurch gekennzeichnet, daß sie einen in der Biegestation (152) im Innern der Biegekammer (32) in Höhe des oberen, den Rahmen (159) der Biegekammer (157) bildenden Randes angeordneten Gaskissentisch (161) umfaßt, der infolge einer Relativbewegung die Übernahme der durch den oberen den Rahmen (159) bildenden Rand zu biegenden Glasscheibe gestattet.

26. Einrichtung nach Anspruch 25, dadurch gekennzeichnet, daß die obere Vollform (160) mit einer sie umgebenden Schürze versehen ist, die zwischen dieser Schürze und der oberen Form einen Saugspalt bildet.

27. Einrichtung nach Anspruch 13, gekennzeichnet durch ringförmige Biegerahmen (70) für den Transport der Glasscheiben (76) durch den Durchlaufofen, die mit einer vollflächigen oberen Biegeform (82) versehene Biegestation (75) und die Abkühlstation, wobei die ringförmigen Biegerahmen (70) geschlossene Seitenwinde und einen unteren Flansch (79) umfassen, der mit der unterhalb der Transportebene angeordneten Druckkammer (77) in dichter Weise zusammenwirkt.

## Claims

1. Process for curving glass plates (9, 76, 86, 144), in which the glass plates (9, 76, 86, 144) are heated in a horizontal position in a straight-through furnace (1, 65, 85, 150) to the curving temperature and are pressed in a curving station (4, 75, 125, 152) adjacent to the straight-throught furnace (1, 65, 85, 150) by means of an annular frame (33, 70, 109, 141, 159) against a curving mould having a solid surface (40, 82, 105, 132, 160) and are then brought into a cooling station (5, 120, 153) by means of a support frame, characterized in that the glass plates (9, 76, 86, 144) in curving station (4, 75, 125, 152), during the pressing between the annular frame (33, 70, 109, 141, 159) and the mould having a solid surface (40, 82, 105, 132, 160) are pressed in the zone situated within the annular frame (33, 70, 109, 141, 159), by the static pressure of a hot gas, against the curving mould having a solid surface (40, 82, 105, 132, 160), the static pressure being created in a pressure chamber (32, 77, 136, 157), of which the end face is bounded by the annular frame (33, 70, 109, 141, 159) and is closed by the glass plate (9, 76, 86, 144) applied in sealing manner against this annular frame (33, 70, 109, 141, 159).

2. Process according to claim 1, characterized in that the value of the static pressure acting on the pane is from 400 to 2000 Pa.

3. Process according to Claim 1 or 2, characterized in that the glass plates (9), disposed in the straight-through furnace (1) on a conveyor composed of driven successive conveyor rollers (2), are heated to the curving temperature and are raised from the conveyor, at the end of the straight-through furnace (1) or in a transfer station (3) which follows the straight-through furnace (1), by means of an upwardly and downwardly movable suction plate (10) and are deposited on the lower element (33, 132) of the curving press.

4. Process according to Claim 3, characterized in that the lower element (33) of the curving press constitutes the end face of the pressure chamber (32), the transfer being carried out by lowering the upper mould (40).

5. Process according to Claim 3, characterized in that the lower element (132) of the curving press constitutes the upwardly movable mould having a solid surface, which is raised for pressing the glass sheet against the annular frame (141) constituting the lower end face of the pressure chamber (136).

6. Process according to Claim 1 or 2, characterized in that the glass plates (76), placed on an annular frame (70), are conveyed with this frame (70) through the straight-through furnace (65) and are heated to the curving temperature, the lower face (72) of this annular frame (70) being then connected in sealed manner by its lower part, for the purpose of the curving, to the pressure chamber (77).

7. Process according to Claim 6, characterized in that a pair of glass plates (76) to be treated later for forming a safety pane is placed on the annular frame (70) and is curved in one single operation.

8. Process according to Claim 1 or 2, characterized in that the glass plates (86) are conveyed on a conveyor composed of driven conveying rollers (87), successively through the straight-through furnace (85) and into the curving station and, in this curving station, each is raised above the conveying rollers (87) by a hot gas current delivered by a vertically orientated flow duct (99) and is pressed against the curving mould having a solid surface (105), movable up and down above the conveying rollers, the conveying rollers (87') disposed in the curving zone are removed and the curving mould having a solid surface (105) together with the glass plate (86) is then pressed against a lower annular mould (109), constituted by the upper end of the flow duct (99) supplying the gas current, a pressure chamber, in which the static pressure of the gas current acts, being thereby formed bounded by the walls of the flow duct (99) for the hot gas current.

9. Process according to Claim 1 or 2, characterized in that the glass plates are supported in bending station (152) on a gas cushion table (161), then following a relative displacement of this table (161) they are taken over by this annular frame (159) and are pressed between the solid mould (160) and the annular frame (159) with application of the static pressure of hot gas supplied into the pressure chamber (157).

10. Process according to Claim 9, characterized in that, after the curving, a curved glass plate is held by suction by the solid mould (160), which ascends, in that a frame is brought beneath the solid mould (160) and recovers the curved glass plate, in that this frame (164) together with the glass plate is brought into waiting in a heated enclosure (154) while a second glass plate is subjected to the curving, in that after curving of this second glass plate, the frame (164) loaded with the first glass plate, collects the second glass plate, which thus rests upon the first one.

11. Process according to Claim 9, characterized in that the mould having a solid surface (160), being associated with a skirt surrounding it with an intermediate space through which the suction acts between the solid surface and the skirt, two superimposed glass plates are simultaneously pressed and then raised together with the solid mould (160) by being held against it before being deposited onto a frame (164) introduced into the curving station (152).

12. Process according to one of the preceding Claims, characterized in that, after curving by the use of a static pressure of hot gases under pressure in a pressure chamber, cold gases are fed into the pressure chamber thus leading to hardening of the glass.

13. Apparatus for carrying out the process according to Claim 1, comprising a straight-through furnace (1, 65, 85, 150), a curving station (4, 75, 125, 152) in which there is disposed a curving mould having a solid surface (40, 82, 105, 132, 160), a cooling station (5, 120, 153) and a support frame bringing the curved glass sheets from the curving station (4, 75, 125, 152) to the cooling station, characterized in that this apparatus comprises, in addition, a pressure chamber (32, 77, 136, 157) capable of being pressurized by means of a hot gas, the end face of which is bounded by an annular frame (33, 70, 109, 141, 159) cooperating with the curing mould having a solid surface (40, 82, 105, 132, 160) for the pressing of the glass sheets.

14. Apparatus according to Claim 13, characterized by a conveyor composed of rollers (2, 87, 151) for conveying the glass sheets through the straight-through furnace (1, 85, 150) and in that the curving mould having a solid surface (40, 105, 160), disposed above the conveying plane for the glass sheets, is movable upwards and downwards, the lower annular frame (33, 109, 159) being formed by the upper edge of the wall of the pressure chamber (32, 157).

15. Apparatus according to Claim 14, characterized in that the upper curving mould having a solid surface (40, 160) is a suction mould against which, after the curving operation, the curved glass plate (9) is held by suction until it is taken over by a support frame (48, 164) disposed on a movable carriage (24) for the purpose of being subsequently transported into the succeeding station.

16. Apparatus according to Claim 14 or 15, characterized by a transfer station (3) in the downstream part of the furnace (1) and a carriage (17) displacing the pressure chamber (32) between this transfer station (3) and the curving station (4).

17. Apparatus according to Claim 13, characterized by a conveyor composed of rollers (2) for conveying the glass sheets through the straight-through furnace (1) and in that the curving mould having a solid surface (132) being disposed beneath the conveying plane for the glass sheets, the annular curving frame (141) is formed by the lower edge of the pressure chamber (136), the annular part (128) of the curving mould having a solid surface (132), coming into contact with the marginal zone of the glass plate, being capable of being separated and displaced as a conveying frame after the curving operation.

18. Apparatus according to Claim 17, characterized in that said annular part (128) may, in addition, be displaced into a transfer station (3) for the purpose of taking over the glass plates heated to the curving temperature.

19. Apparatus according to Claim 17 or 18, characterized in that the lower mould having a solid surface (132) comprises a shoulder (135) which holds the annular frame (128), in that the assembly may be raised to be brought against the lower end (141) of the upper pressure chamber (136) and may be lowered for disengaging the annular frame (128) from the lower mould having a solid surface (132).

20. Apparatus according to Claim 14, characterized in that the conveyor extends into the curving station, the conveyor rollers (87') disposed within the curving station being mounted on a displaceable carriage (88), which can be moved laterally out of the curving station after the glass plate (86) has been raised above the conveyor rollers (87').

21. Apparatus according to Claim 20, characterized in that the conveyor rollers (87') may be connected to the drive mechanism (96) for the preceding conveyor rollers (87) by a releasable coupling (95).

22. Apparatus according to Claim 20 or 21, characterized by the provision, beneath the conveyor rollers (87'), of a vertical flow duct (99) equipped with a blower (100) creating a hot gas current, the upper edge of which constitutes the annular frame (109), it being understood that the flow duct (99), after the pressing of a glass plate (86) by the upper curving mould having a solid surface (105), serves as a pressure chamber kept under static pressure.

23. Apparatus according to Claim 22, characterized by a support frame (122) introduced into the curving station (105) for collecting the curved glass plate and conveying it to the cooling station, while after curving the upper solid mould (105) is raised, and in that the upwardly flowing gaseous current continues to act and holds the glass plate applied against said solid upper mould (105).

24. Apparatus according to one of Claim 14 to 23, characterized in that the annular curving frame (33, 109, 141, 159) has the form of a ring comprising a flange (111, 140) connected to the fixed part (99, 137) of the pressure chamber (32, 136, 157).

25. Apparatus according to Claim 13 or 14, characterized in that it comprises a gas cushion table (161) disposed in the curving station (152), inside the pressure chamber (32) at a height variable relative to the upper edge forming a frame (159) of the pressure chamber (157), thus making possible, following a relative movement, the taking over of the glass plate to be curved by said upper edge forming a frame (159).

26. Apparatus according to Claim 25, characterized in that the solid upper mould (160) is associated with a skirt surrounding it while maintaining between said skirt and said upper mould a space, through which the suction takes place.

27. Apparatus according to Claim 13, characterized by annular curving frames (70) for conveying the glass sheets (76) through the straight-through furnace (65), the curving station (75) in which there is disposed an upper curving mould having a solid surface (82) and the cooling station, said annular curving frame (70) comprising closed lateral walls and a bottom flange (79) cooperating in sealing manner with pressure chamber (77) disposed below the conveying plane.

**Fig. 1**

*Fig. 2*

EP 0 290 346 B1

Fig. 3

EP 0 290 346 B1

Fig. 4

EP 0 290 346 B1

Fig. 5

*Fig. 6*

Fig. 7

EP 0 290 346 B1

_Fig. 8_